# EUROPÄISCHE PATENTSCHRIFT

(11) **EP 1 126 991 B1**
(45) Veröffentlichungstag und Bekanntmachung des Hinweises auf die Patenterteilung: **24.07.2002**
(21) Anmeldenummer: 99971767.1
(22) Anmeldetag: 30.10.1999
(51) Int. Cl.: B60N 2/08

(54) **SICHERHEITSEINRICHTUNG FÜR FAHRZEUG-SITZBÄNKE**
SAFETY DEVICE FOR VEHICLE SEAT BENCHES
DISPOSITIF DE SECURITE POUR BANQUETTES DE VEHICULES

(30) Priorität: 05.11.1998 DE 29819764 U
(43) Veröffentlichungstag der Anmeldung: 29.08.2001
(73) Patentinhaber: Johnson Controls GmbH, 51399 Burscheid (DE)
(72) Erfinder: MÜNCH, Ingo, D-42399 Wuppertal (DE); PUSCH, Sascha, D-42929 Wermelskirchen (DE); STRIEDER, Lutz, D-42855 Remscheid (DE); DEISSMANN, Bernd, D-42369 Wuppertal (DE)
(74) Vertreter: Patentanwälte Dr. Solf & Zapf
(86) Internationale Anmeldenummer: EP9908297
(87) Internationale Veröffentlichungsnummer: WO0027667

(56) Entgegenhaltungen:
- US-A- 3 858 934
- US-A- 5 106 144
- US-A- 5 332 290
- US-A- 5 626 392
- US-A- 5 775 780

## Beschreibung

Die vorliegende Erfindung betrifft eine neuartige Sicherheitseinrichtung für eine Fahrzeug-Sitzbank gemäß dem Oberbegriff des Anspruchs 1, die über zwei seitliche, parallele Schiebeführungen innerhalb des Fahrzeugs über einen Verstellbereich hinweg verschiebbar und in unterschiedlichen Positionen arretierbar geführt ist.

Eine derartige Sicherheitseinrichtung ist aus Dokument US 5,775,780 bekannt.

Manche Kraftfahrzeuge, insbesondere Großraumwagen, sogenannte VAN's, sind heute mit mehreren, z.B. drei Sitzreihen ausgestattet, von denen vor allem die zweite Reihe, eventuell aber alternativ oder zusätzlich auch die dritte Reihe, als Sitzbank ausgebildet ist, die sich in Fahrzeug-Längsrichtung verschieben läßt. Hierdurch läßt sich zum einen die Beinfreiheit der Passagiere variieren, indem die Sitzbank innerhalb eines bestimmten Verstellbereichs in verschiedenen Positionen arretierbar ist. Zum anderen kann durch Verschieben der ganzen Sitzbank in eine Nichtgebrauchsstellung in manchen Fahrzeugen auch der zur Unterbringung von Gepäck oder sonstiger Ladung nutzbare Raum variiert werden.

Derartige Sitzbänke müssen zwangsläufig in ihrem etwa mittigen Bereich mit mindestens einer Veranker-ng für einen Sicherungsgurt ausgestattet werden, damit sich alle Personen, auch die mittlere(n), anschnallen können. Über die jeweilige Gurtverankerung werden aber bei starkem Bremsen und bei Unfällen (Frontal- und Heckstößen) Reaktionskräfte in die Sitzbank eingeleitet. Diese Kräfte können so hoch sein, daß es zu Deformationen der gesamten Sitzbank bzw. ihrer Tragkonstruktion kommen kann. Dies kann in der Folge auch zu Verformungen im Bereich der seitlichen Schiebeführungen führen, schlimmstenfalls sogar zu einem Herausreißen der gesamten Sitzbank, so daß die Passagiere den Halt verlieren und somit einem äußerst hohen Verletzungsrisiko ausgesetzt sind.

Der Erfindung liegt deshalb die Aufgabe zugrunde, die Sicherheit solcher verschiebbaren Sitzbänke zu erhöhen und hierdurch das Verletzungsrisiko der Passagiere deutlich zu reduzieren.

Erfindungsgemäß wird dies durch eine Sicherheitseinrichtung nach dem Anspruch 1 erreicht. Vorteilhafte Weiterbildungen der Erfindung sind in den abhängigen Ansprüchen enthalten.

Erfindungsgemäß besteht eine neuartige Sicherheitseinrichtung somit aus (mindestens) einer im etwa mittigen Bereich zwischen den seitlichen Schiebeführungen und zu diesen parallel anzuordnenden Sicherungsschiene und einem dazu zumindest über den Verstellbereich der Sitzbank hinweg relativbeweglich geführten Sicherungsschlitten. Vorzugsweise wird die Sicherungsschiene ortsfest im Fahrzeug-Bodenbereich unterhalb der Sitzbank befestigt, während der Sicherungsschlitten der Sitzbank zugeordnet ist, d.h. fest an der Unterkonstruktion der Sitzbank befestigt wird, so daß er gemeinsam mit der Sitzbank relativ zur orstfesten Sicherungsschiene beweglich ist. Allerdings liegt eine kinematische Umkehr durchaus im Bereich der Erfindung. Der Sicherungsschlitten ist erfindungsgemäß während regulärer Verschiebebewegungen und in Positionen innerhalb des Verstellbereichs der Sitzbank frei längsbeweglich zu der Sicherungsschiene angeordnet, und zwar vorzugsweise im wesentlichen berührungslos in allen Richtungen. Eventuell kann aber auch eine Abstützung von vertikal nach unten wirkenden Kräften über Tragrollen oder dergleichen Mittel vorgesehen sein, was vor allem bei Belastung mit schweren Personen oder Gegenständen vorteilhaft ist. Die relative Anordnung zwischen der Sicherungsschiene und dem darin beweglichen Sicherungsschlitten ist erfindungsgemäß aber derart, daß durch irreguläre, insbesondere brems- oder crashbedingte Verformungen im Bereich der Sitzbank der Sicherungsschlitten in einen arretierenden Eingriff mit der Sicherungsschiene gelangt. In diesem Fall wird somit eine zusätzliche Verankerung der Sitzbank in ihrem etwa mittigen Bereich wirksam, wodurch die hier eingeleiteten Reaktionskräfte effektiv aufgenommen werden. Dadurch werden im Bereich der seitlichen Schiebeführungen Überbeanspruchungen und daraus resultierende Schäden, wie insbesondere ein vollständiges Lösen der gesamten Sitzbank aus ihren Halterungen, vorteilhafterweise sicher vermieden.

In einer vorteilhaften Ausgestaltung der Erfindung ist die Sicherheitseinrichtung speziell für solche Sitzbänke konzipiert, die- insbesondere zur Vergößerung eines Laderaumes innerhalb des Fahrzeugs - über ihren eigentlichen Verstellbereich (Nutzbereich) hinausgehend in eine Nichtgebrauchsstellung verschiebbar sind. Hierbei sind nun erfindungsgemäß zwischen der Sicherungsschiene und dem Sicherungsschlitten derart steuerbare Anschlagmittel gebildet, daß in einer zum Sitzen geeigneten Position einer Rückenlehne und/oder eines Sitzteils der Sitzbank durch selbsttätiges Aktivieren der Anschlagmittel die Verschiebung auf den eigentlichen Verstellbereich begrenzt und somit ein Verschieben in die Nichtgebrauchsstellung ausgeschlossen wird, während nur in einer umgeklappten Nichtgebrauchslage der Rückenlehne und/oder des Sitzteils der Sitzbank durch Deaktivieren (Freigeben) der Anschlagmittel die weitergehende Verschiebung der Sitzbank in die Nichtgebrauchsstellung freigegeben wird. Diese vorteilhafte Ausgestaltung stellt insofern einen besonders bedeutenden Sicherheitsaspekt dar, als die Sitzbank zunächst in eine umgeklappte Nichtgebrauchslage gebracht werden muß, um sie überhaupt in die Nichtgebrauchsstellung bringen zu können. Hierdurch wird vermieden, daß die Nichtgebrauchsstellung auch mit auf der Sitzbank sitzenden Personen erreicht werden kann. Mit anderen Worten bedeutet dies, daß Personen nur dann auf der Sitzbank sitzen können, wenn sie sich in ihrem eigentlichen Verstellbereich befindet, wobei sie dann durch die erfindungsgemäße Sicherheitseinrichtung effektiv gesichert ist.

Die Erfindung soll nun anhand von in der Zeichnung veranschaulichten, bevorzugten Ausführungsbeispielen genauer erläutert werden. Dabei zeigen:
- Fig. 1: eine schematische Vorderansicht einer FahrzeugSitzbank mit einer erfindungsgemäßen Sicherheitseinrichtung,
- Fig. 2: eine vergrößerte Schnittansicht im Bereich der Sicherheitseinrichtung (Bereich II gemäß Fig. 1 bzw. Schnitt II-II gemäß Fig. 3 bzw. 5),
- Fig. 3: eine schematische Seitenansicht der Sicherheitseinrichtung in Pfeilrichtung X gemäß Fig. 2 in einer ersten Ausführungsform und in einer ersten Funktionsstellung,
- Fig. 4: die Ausführungsform nach Fig. 3 in einer zweiten Funktionsstellung,
- Fig. 5: eine Ansicht analog zu Fig. 3 einer zweiten Ausführungsform der erfindungsgemäßen Sicherheitseinrichtung in einer der Fig. 3 entsprechenden Funktionsstellung,
- Fig. 6: eine Ansicht analog zu der in Fig. 4 dargestellten Funktionsstellung der zweiten Ausführungsform der Sicherheitseinrichtung,
- Fig. 7: eine vergrößerte Detaildarstellung der Ausführungsform und Funktionsstellung nach Fig. 5 und
- Fig. 8: eine vergrößerte Detaildarstellung der Funktionsstellung nach Fig. 6.

In den verschiedenen Figuren der Zeichnung sind gleiche bzw. sich funktionell entsprechende Teile stets mit den gleichen Bezugszeichen versehen und werden daher in der Regel auch jeweils nur einmal beschrieben.

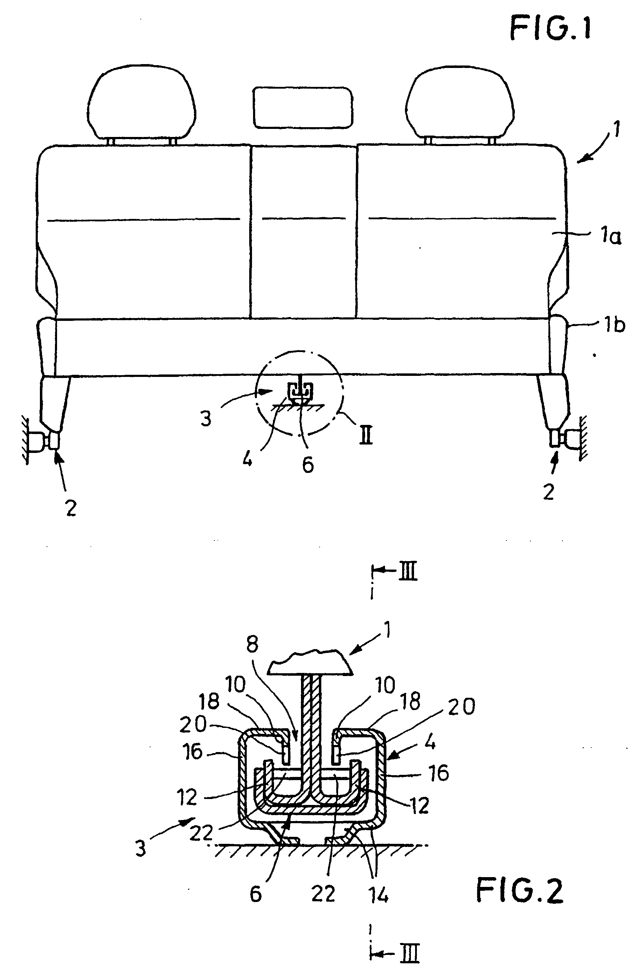

In Fig. 1 ist eine Fahrzeug-Sitzbank 1 veranschaulicht, die über zwei seitliche, zueinander parallele Schiebeführungen 2 innerhalb eines Fahrzeugs über einen bestimmten Verstellbereich hinweg in Fahrzeug-Längsrichtung verschiebbar und hierbei in unterschiedlichen Positionen arretierbar geführt ist. Die Schiebeführungen 2 bestehen in an sich bekannter Weise aus ortsfest im Fahrzeug gehalterten Führungsschienen und mit der Sitzbank verbundenen Gleit- und/oder Rollelementen, die in den Führungsschienen geführt sind. Zur Arretierung der Sitzbank 1 in der jeweils gewünschten Längsposition im Fahrzeug sind geeignete Blockiereinrichtungen vorgesehen. Im übrigen sind die Schiebeführungen 2 nicht Teil der Erfindung und werden deshalb im weiteren auch nicht genauer beschrieben.

Erfindungsgemäß ist die Sitzbank 1 mit einer neuartigen Sicherheitseinrichtung 3 ausgestattet, die im wesentlichen aus (mindestens) einer etwa in der geometrischen Mitte zwischen den Schiebeführungen 2 und zu diesen parallel angeordneten Sicherungsschiene 4 und einem darin zumindest über den eigentlichen Verstellbereich der Sitzbank 1 hinweg relativbeweglich geführten Sicherungsschlitten 6 besteht.

Vorzugsweise wird die Sicherungsschiene 4 im vertikal unterhalb der Sitzbank 1 liegenden Bereich ortsfest im Fahrzeug befestigt, während der Sicherungsschlitten 6 im Bereich einer unteren Tragkonstruktion an der Sitzbank 1 angebracht wird. Im Regelfall, d.h. während regulärer Verschiebebewegungen sowie in den jeweiligen Verstellpositionen der Sitzbank 1 innerhalb ihres eigentlichen Verstellbereichs, ist der Sicherungsschlitten 6 frei längsbeweglich in der Sicherungsschiene 4 angeordnet. Dies bedeutet vorzugsweise, daß der Sicherungschlitten 6 im wesentlichen berührungslos in allen Raumrichtungen innerhalb der Sicherungsschiene 4 gehalten wird, was insbesondere in Fig. 2 erkennbar ist. Kommt es allerdings bei starken, beispielsweise unfallbedingten Verzögerungen oder Beschleunigungen durch die vor allem über Sicherheitsgurt-Verankerungen eingeleiteten Reaktionskräften zu irregulären Verformungen im Bereich der Sitzbank 1, so gelangt erfindungsgemäß der Sicherungsschlitten 6 in einen arretierenden Eingriff mit der Sicherungsschiene 4. Somit hat die erfindungsgemäße Sicherheitseinrichtung 3 im regulären Betrieb des Fahrzeugs praktisch keine Funktion, sondern kommt erst vor allem bei Unfällen zum Einsatz, um eine zusätzliche Verankerung der Sitzbank 1 zu gewährleisten und hierdurch die Passagiere wirksam vor Verletzungen zu schützen, indem die Gurt-Rückhaltesysteme eine feste Verankerung behalten. Es wird somit eine gesteigerte Sicherheit sowohl bei Frontal- als auch bei Heckstößen erreicht.

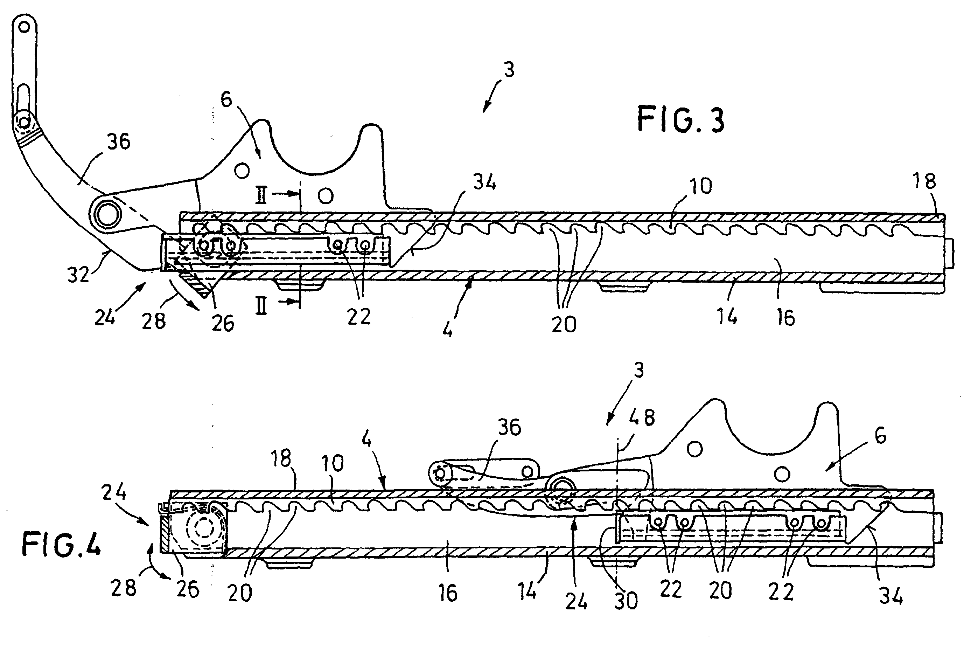

Gemäß Fig. 2 ist in dem bevorzugten Ausführungsbeispiel vorgesehen, daß die Sicherungsschiene 4 einen etwa U-förmigen, in Richtung der Sitzbank 1, also vertikal nach oben, zum Eingriff des Sicherungsschlittens 6 offenen Querschnitt mit zwei eine obere Längsöffnung 8 begrenzenden Haltestegen 10 aufweist. Der durch die Längsöffnung 8 hindurch in die Sicherungsschiene 4 eingreifende Sicherungsschlitten 6 hintergreift die Haltestege 10 mit zwei seitlichen Arretierabschnitten 12, und zwar im Regelfall berührungslos. Ein Abstand zwischen den Arretierabschnitten 12 des Sicherungsschlittens und den Haltestegen 10 der Sicherungsschiene 4 ist jedoch derart gewählt, daß schon bei relativ geringfügigen Verformungen der Sitzbank 1 der Sicherungsschlitten 6 so relativ zu der Sicherungsschiene 4 bewegt wird, daß er in einen arretierenden Eingriff gelangt. Zweckmäßigerweise besteht das Querschnittsprofil der Sicherungsschiene 4 aus einem Boden 14, zwei zu dem Boden 14 im wesentlichen senkrechten Seitenwandungen 16 und zwei sich von den Seitenwandungen 16 rechtwinklig nach innen aufeinanderzu erstreckenden Profilstegen 18, an die sich die nach innen in Richtung des Bodens 14 weisenden, zueinander im wesentlichen parallelen Haltestege 10 anschließen. Hierbei weist die Sicherungsschiene 4 im Bereich der Haltestege 10 Arretiermittel insbesondere in Form von mehreren über die Schienenlänge verteilten, vorzugsweise sägezahnartigen Aussparungen 20 zum Eingriff mindestens eines Arretierelementes 22 des Sicherungsschlittens 6 auf. Die Arretierelemente 22 des Sicherungsschlittens 6 sind bevorzugt als Bolzen ausgebildet, die quer zur Verschieberichtung angeordnet sind. Es wird hierzu auch auf die Figuren 3 bis 6 hingewiesen, wonach bevorzugt die Aussparungen 20 der Sicherungsschiene 4 derart schräg ausgerichtet sind, daß im Falle eines Eingriffs der Arretierelemente 22 diese in der üblichen Vorwärts-Fahrtrichtung des Fahrzeugs formschlüssig gehalten sind. Dies bedeutet, daß die jeweils zwischen den Aussparungen 20 verbleibenden Abschnitte sägezahnartig nach hinten in Rückwärtsrichtung des Fahrzeugs weisen. Um eine gute Stabilität zu erreichen, weist der Sicherungsschlitten 6 vorzugsweise in seinem vorderen sowie hinteren Bereich jeweils zwei in Verschieberichtung beabstandete Arretierelemente 22 auf. Da es bei Unfällen oftmals zu einem Verkippen der Sitzbank kommt, greifen hierdurch zumindest jeweils zwei Arretierelemente 22 im vorderen oder hinteren Bereich in die Aussparungen 20 der Profilschiene 4 ein.

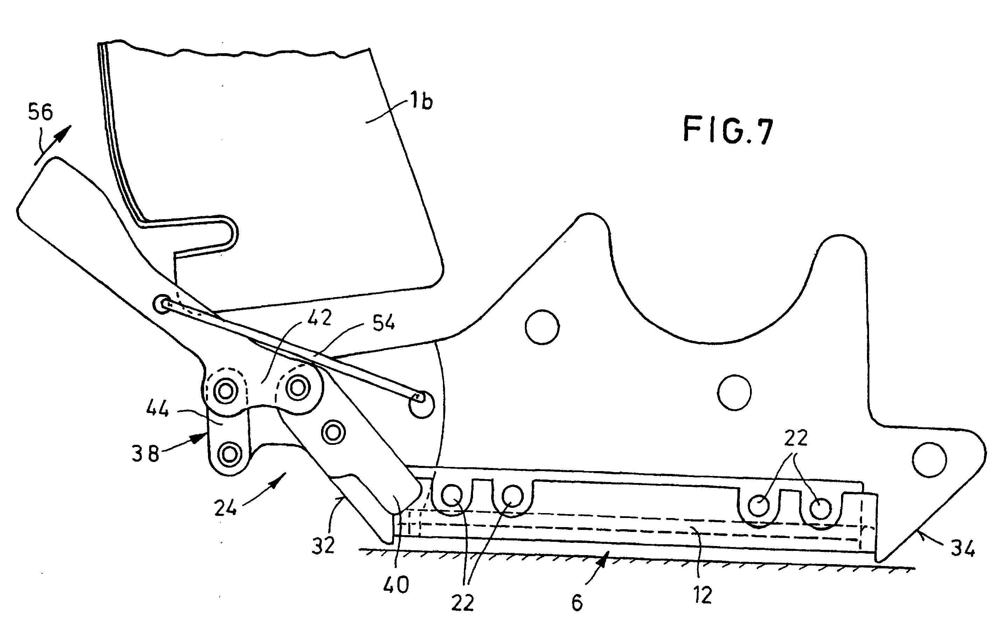

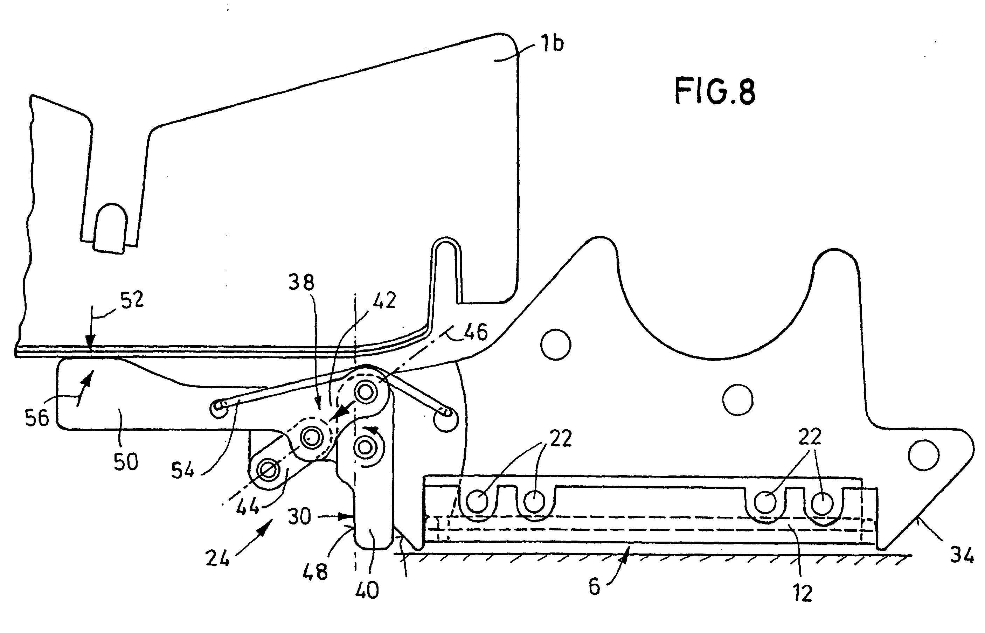

In einem bevorzugten Anwendungsfall ist die Sitzbank 1 vor allem zur Vergößerung eines Laderaumes über ihren eigentlichen Verstellbereich hinausgehend innerhalb des Fahrzeugs in eine Nichtgebrauchsstellung verschiebbar. Hierfür ist bezüglich der Sicherheitseinrichtung 3 erfindungsgemäß vorgesehen, daß zwischen der Sicherungsschiene 4 und dem Sicherungsschlitten 6 derart steuerbare Anschlagmittel 24 gebildet sind, daß in einer zum Sitzen geeigneten Position einer Rückenlehne 1a und/oder eines Sitzteils 1b der Sitzbank 1 durch Aktivieren der Anschlagmittel 24 die Verschiebung auf den eigentlichen Verstellbereich begrenzt und somit ein Verschieben in die Nichtgebrauchsstellung ausgeschlossen wird, und daß nur in einer umgeklappten, ein normales Sitzen unmöglich machenden Nichtgebrauchslage der Rückenlehne 1a und/oder des Sitzteils 1b durch Deaktivieren (Freigeben) der Anschlagmittel 24 die weitergehende Verschiebung der Sitzbank 1 in die Nichtgebrauchsstellung freigegeben wird. Hierbei bewegt sich dann der Sicherungsschlitten 6 aus der Sicherungsschiene 4 hinaus. Dieses Hinausbewegen wird anderenfalls durch die Anschlagmittel 24 in der zum Sitzen geeigneten Position der Sitzbank 1 selbsttätig verhindert. Dies bedeutet, daß die erfindungsgemäßen Anschlagmittel 24 in ihrem aktivierten Zustand den Sicherungsschlitten 6 in Verschieberichtung gegen ein Austreten aus der Sicherungsschiene 4 blockieren, während der Sicherungsschlitten 6 im deaktivierten Zustand der Anschlagmittel 24 längs aus der Sicherungsschiene 4 herausbewegbar ist. Es ist besonders vorteilhaft, die Anschlagmittel 24 unmittelbar durch die Teile der Sitzbank 1 zu steuern. Hierzu sind zweckmäßigerweise an dem mit der Sitzbank 1 verbundenen Sicherungsschlitten 6 Steuermittel vorgesehen, auf die insbesondere das Sitzteil 1b unmittelbar einwirkt. Die Sicherungsschiene 4 weist in ihrem in Richtung der Nichtgebrauchsstellung weisenden Endbereich ein passiv bewegliches Anschlagelement 26 auf, welches vorzugsweise durch Federkraft selbsttätig in einer die Sicherungsschiene 4 gegen Austreten des Sicherungsschlittens 6 verschließenden Anschlagposition gehalten wird, jedoch gegen die Federkraft in eine Freigabeposition bewegbar ist. Dies ist in den Fig. 3 bis 6 jeweils durch Pfeile 28 veranschaulicht. Demgegenüber weist der Sicherungsschlitten 6 - siehe auch die gesonderten Darstellungen in Fig. 7 und 8 - einerseits einen Gegenanschlag 30 und andererseits eine schräge Steuerfläche 32 derart auf, daß im aktivierten Zustand der Anschlagmittel 24 der Gegenanschlag 30 wirksam ist und zur Verschiebebegrenzung gegen das Anschlagelement 26 der Sicherungsschiene 4 wirkt, während im deaktivierten Zustand der Anschlagmittel 34 die schräge Steuerfläche 32 wirksam ist, indem sie gegen das Anschlagelement 26 wirkt und dieses hierdurch gegen die Federkraft in die Freigabeposition wegdrückt, so daß anschließend der Sicherungsschlitten 6 aus der Sicherungsschiene 4 bewegbar ist. Hierdurch läßt sich die gesamte Sitzbank 1 dann in ihre Nichtgebrauchsstellung überführen. Für die Rückbewegung in ihre Gebrauchsposition bzw. in den eigentlichen Verstellbereich weist der Sicherungsschlitten 6 auch eine rückwärtige Schrägfläche 34 derart auf, daß auch bei einem Rückverschieben der Sitzbank 1 das Anschlagelement 26 gegen die Federkraft praktisch zum Öffnen der Sicherungsschiene 4 weggedrückt wird, bis der Sicherungsschlitten wieder ganz in die Sicherungsschiene 4 eingeführt ist.

In einer ersten, in den Fig. 3 und 4 veranschaulichten Ausführungsform der Erfindung ist der Gegenanschlag 30 starrer Bestandteil des Sicherungsschlittens 6, während die schräge Steuerfläche 32 durch einen beweglich gelagerten Steuerhebel 36 gebildet ist. Der Steuerhebel 36 wird über nicht dargestellte Verbindungsmittel in Abhängigkeit von den jeweiligen Stellungen der Rückenlehne la und/oder des Sitzteils 1b der Sitzbank 1 bewegt. Der Steuerhebel 36 ist relativ zu dem Gegenanschlag 30 derart angeordnet, daß im aktivierten Zustand der Anschlagmittel 24 der Steuerhebel 36 in einer den Gegenanschlag 30 wirksam machenden Inaktivstellung steht. Dieser Zustand ist in Fig. 4 dargestellt.

Im deaktivierten Zustand der Anschlagmittel 24 - siehe Fig. 3 - steht der Steuerhebel 36 in einer Aktivstellung, in der er selbst über die schräge Steuerfläche 32 mit dem Anschlagelement 26 zusammenwirkt, um ein Austreten des Sicherungsschlittens 6 aus der Sicherungsschiene 4 zu ermöglichen.

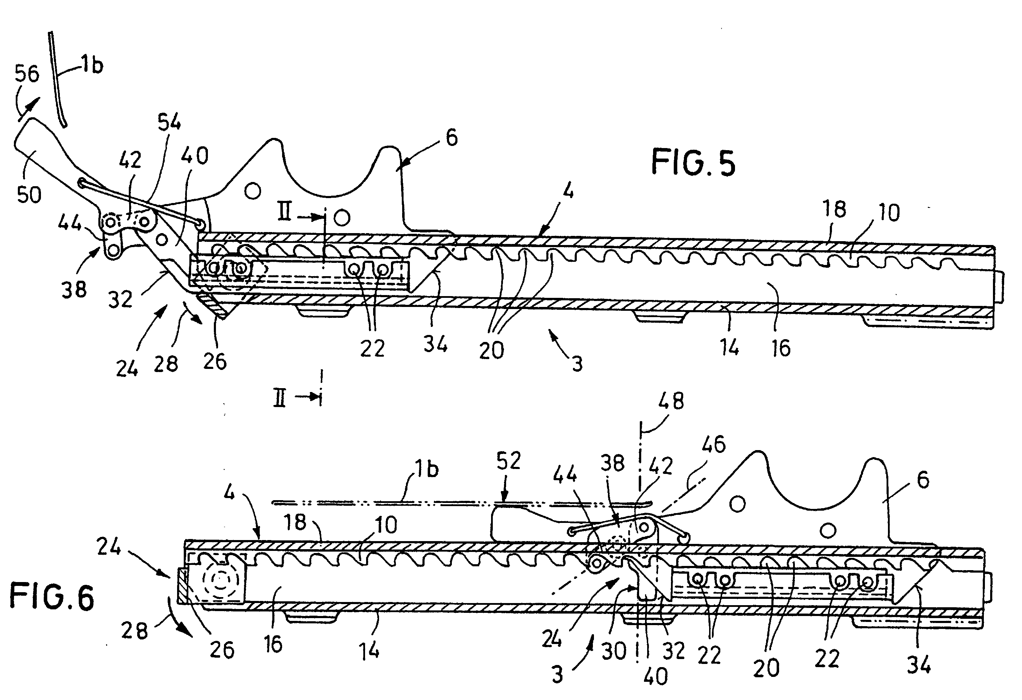

In einer zweiten, in den Fig. 5 bis 8 veranschaulichten Ausführungsform ist die schräge Steuerfläche 32 starrer Teil des Sicherungsschlittens 6, während der Gegenanschlag 30 Bestandteil einer beweglichen, der Steuerfläche 32 derart vorgeordneten Steuerhebelanordnung 38 ist, daß im aktivierten Zustand der Anschlagmittel 24 ein den Gegenanschlag 30 bildender Sperrhebel 40 wirksam vor der Steuerfläche 32 liegt (Fig. 6 und 8). Anderenfalls steht im deaktivierten Zustand der Anschlagmittel 24 der Sperrhebel 40 in einer die schräge Steuerfläche 32 freigebenden und hierdurch wirksam machenden Inaktivstellung (Fig. 5 und 7).

In weiterer bevorzugter Ausgestaltung der Erfindung weist die Steuerhebelanordnung 38 einen den Sperrhebel 40 beaufschlagenden Kniehebelmechanismus mit zwei Kniehebelabschnitten 42 und 44 derart auf, daß der Sperrhebel 40 in seiner als Gegenanschlag 30 wirksamen Stellung (Fig. 6 und 8) durch die dann gestreckt in einer etwa 180°-Anordnung, also im wesentlichen in einer Ebene 46 fluchtend stehenden Kniehebelabschnitte 42, 44 starr gehalten wird. Der Gegenanschlag 30 liegt hierbei jedenfalls in einer etwa senkrecht zur Verschieberichtung verlaufenden Ebene 48. Durch Vermeidung von Schrägflächen wird somit ein sehr starrer, praktisch formschlüssiger Anschlag erreicht und damit eine Sicherung gegen nahezu beliebig hohe Kräfte in Verschieberichtung.

Es sei noch bemerkt, daß bei der Ausführung nach Fig. 5 bis 8 die Steuerhebelanordnung 38 derart ausgebildet ist, daß sie mit einem Betätigungsabschnitt 50 direkt mit dem Sitzteil 1b zusammenwirkt. Liegt das Sitzteil 1b in seiner normalen Sitzposition, so drückt es direkt auf den Betätigungsabschnitt 50, was in den Fig. 6 und 8 jeweils durch einen Pfeil 52 veranschaulicht ist. Hierdurch wird dann selbsttätig eine Aktivierung der Anschlagmittel 24 bzw. des Gegenanschlags 30 bewirkt. Die Steuerhebelanordnung 38 ist aber durch eine Feder 54 derart vorgespannt, daß durch Wegbewegen des Sitzteils 1b der Betätigungsabschnitt 50 sich selbsttätig in Pfeilrichtung 56 bewegt, wodurch selbsttätig die Anschlagmittel 24 deaktiviert und die schräge Steuerfläche 32 aktiviert werden.

Das federbelastete Anschlagelement 26 kann in einer nicht dargestellten Weiterbildung zur Reibungsverminderung über ein Gleitelement und/oder ein Rollelement mit der schrägen Steuerfläche 32 bzw. mit der rückwärtigen Schrägfläche 34 zusammenwirken.

Die Erfindung ist nicht auf die dargestellten und beschriebenen Ausführungsbeispiele beschränkt, sondern umfaßt auch alle im Sinne der Erfindung gleichwirkenden Ausführungen.

Die Erfindung ist nur durch die Merkmalskombination der nachfolgenden Patentansprüche begrenzt.

## Patentansprüche

1. Sicherheitseinrichtung (3) für eine über zwei seitliche, parallele Schiebeführungen (2) innerhalb eines Fahrzeugs über einen Verstellbereich hinweg verschiebbar und in unterschiedlichen Positionen arretierbar geführte Sitzbank (1), bestehend aus mindestens einer zwischen den Schiebeführungen (2) und zu diesen parallel anzuordnenden Sicherungsschiene (4) und einem dazu zumindest über den Verstellbereich der Sitzbank (1) hinweg relativbeweglich geführten Sicherungsschlitten (6), wobei der Sicherungsschlitten (6) während regulärer Verschiebebewegungen und in Positionen innerhalb des Verstellbereichs der Sitzbank (1) frei längsbeweglich relativ zu der Sicherungsschiene (4) angeordnet ist und durch irreguläre bei starken, beispielsweise unfallbedingten Verzögerungen oder Beschleunigungen auftretende Verformungen im Bereich der Sitzbank (1) in einen die Sitzbank (1) arretierenden Eingriff mit der Sicherungsschiene (4) gelangt, **dadurch gekennzeichnet, daß** die Sitzbank (1) - insbesondere zur Vergößerung eines Laderaumes - über ihren eigentlichen Verstellbereich hinausgehend innerhalb des Fahrzeugs in eine Nichtgebrauchsstellung verschiebbar ist, wobei zwischen der etwa mittig zwischen den Schiebeführungen (2) angeordneten Sicherungsschiene (4) und dem Sicherungsschlitten (6) derart steuerbare Anschlagmittel (24) gebildet sind, daß in einer zum Sitzen geeigneten Position einer Rückenlehne (1a) und/oder eines Sitzteils (1b) der Sitzbank (1) durch Aktivieren der Anschlagmittel (24) die Verschiebung auf den eigentlichen Verstellbereich begrenzt und somit ein Verschieben in die Nichtgebrauchsstellung ausgeschlossen wird, und daß nur in einer Nichtgebrauchslage der Rückenlehne (1a) und/oder des Sitzteils (1b) der Sitzbank (1) durch Deaktivieren der Anschlagmittel (24) die weitergehende Verschiebung der Sitzbank (1) in die Nichtgebrauchsstellung freigegeben wird.

2. Sicherheitseinrichtung nach Anspruch 1,
**dadurch gekennzeichnet, daß** die Sicherungsschiene (4) ortsfest innerhalb des Fahrzeugs sowie der Sicherungsschlitten (6) an der Sitzbank (1) anzuordnen sind.

3. Sicherheitseinrichtung nach Anspruch 1 oder 2,
**dadurch gekennzeichnet, daß** die Sicherungsschiene (4) einen etwa U-förmigen, in Richtung der Sitzbank (1) zum Eingriff des Sicherungsschlittens (6) offenen Querschnitt mit zwei eine Längsöffnung (8) begrenzenden Haltestegen (10) aufweist, wobei der durch die Längsöffnung (8) in die Sicherungsschiene (4) eingreifende Sicherungsschlitten (6) die Haltestege (10) mit zwei Arretierabschnitten (12) hintergreift.

4. Sicherheitseinrichtung nach Anspruch 3,
**dadurch gekennzeichnet, daß** die Sicherungsschiene (4) Arretiermittel insbesondere in Form von mehreren über die Schienenlänge verteilten Aussparungen (20) im Bereich der Haltestege (10) zum Eingriff mindestens eines Arretierelementes (22) des Sicherungsschlittens (6) aufweist.

5. Sicherheitseinrichtung nach einem der Ansprüche 1 bis 4,
**dadurch gekennzeichnet, daß** die Anschlagmittel (24) in ihrem aktivierten Zustand den Sicherungsschlitten (6) in Verschieberichtung gegen ein Austreten aus der Sicherungsschiene (4) blockieren, während der Sicherungsschlitten (6) im deaktivierten Zustand der Anschlagmittel (24) längs aus der Sicherungsschiene (4) herausbewegbar ist.

6. Sicherheitseinrichtung nach einem der Ansprüche 1 bis 5,
**dadurch gekennzeichnet, daß** die Sicherungsschiene (4) in ihrem in Richtung der Nichtgebrauchsstellung weisenden Endbereich ein Anschlagelement (26) aufweist, das vorzugsweise durch Federkraft selbsttätig in einer Anschlagposition gehalten wird und gegen die Federkraft in eine Freigabeposition bewegbar ist, wobei der Sicherungsschlitten (6) einerseits einen Gegenanschlag (30) und andererseits eine schräge Steuerfläche (32) derart aufweist, daß im aktivierten Zustand der Anschlagmittel (24) der Gegenanschlag (30) wirksam ist und zur Verschiebebegrenzung gegen das Anschlagelement (26) wirkt, während im deaktivierten Zustand der Anschlagmittel (34) die schräge Steuerfläche (32) wirksam ist, indem sie gegen das Anschlagelement (26) wirkt und dieses gegen die Federkraft in die Freigabeposition wegdrückt, so daß der Sicherungsschlitten (6) aus der Sicherungsschiene (4) bewegbar ist.

7. Sicherheitseinrichtung nach Anspruch 6,
**dadurch gekennzeichnet, daß** der Sicherungsschlitten (6) eine rückwärtige Schrägfläche (34) derart aufweist, daß bei einem Rückverschieben der Sitzbank (1) aus der Nichtgebrauchsstellung in ihren eigentlichen Verstellbereich das Anschlagelement (26) gegen die Federkraft weggedrückt wird.

8. Sicherheitseinrichtung nach Anspruch 6 oder 7,
**dadurch gekennzeichnet, daß** der Gegenanschlag (30) starrer Teil des Sicherungsschlittens (6) ist, während die schräge Steuerfläche (32) durch einen beweglich gelagerten, dem Gegenanschlag (30) derart vorgeordneten Steuerhebel (36) gebildet ist, daß der Steuerhebel (36) im aktivierten Zustand der Anschlagmittel (24) in einer den Gegenanschlag (30) wirksam machenden Inaktivstellung oder im deaktivierten Zustand der Anschlagmittel (24) in einer selbst über die schräge Steuerfläche (32) mit dem Anschlagelement (26) zusammenwirkenden Aktivstellung steht.

9. Sicherheitseinrichtung nach Anspruch 6 oder 7,
**dadurch gekennzeichnet, daß** die schräge Steuerfläche (32) starrer Teil des Sicherungsschlittens (6) ist, während der Gegenanschlag (30) Bestandteil einer beweglichen, der Steuerfläche (32) derart vorgeordneten Steuerhebelanordnung (38) ist, daß im aktivierten Zustand der Anschlagmittel (24) ein den Gegenanschlag (30) bildender Sperrhebel (40) wirksam vor der Steuerfläche (32) liegt oder im deaktivierten Zustand der Anschlagmittel (24) der Sperrhebel (40) in einer die schräge Steuerfläche (32) freigebenden Inaktivstellung steht.

10. Sicherheitseinrichtung nach Anspruch 9,
**dadurch gekennzeichnet, daß** die Steuerhebelanordnung (38) einen den Sperrhebel (40) beaufschlagenden Kniehebelmechanismus mit zwei Kniehebelabschnitten (42,44) derart aufweist, daß der Sperrhebel (40) in seiner als Gegenanschlag (30) wirksamen Stellung durch die gestreckt in einer etwa 180°-Anordnung stehenden Kniehebelabschnitte (42,44) starr gehalten wird.

11. Sicherheitseinrichtung nach einem der Ansprüche 6 bis 10,
**dadurch gekennzeichnet, daß** der Gegenanschlag (30) in einer senkrecht zur Verschieberichtung verlaufenden Ebene (48) liegt.

12. Sicherheitseinrichtung nach einem der Ansprüche 6 bis 11,
**dadurch gekennzeichnet, daß** das federbelastete Anschlagelement (26) zur Reibungsverminderung über ein Gleitelement und/oder ein Rollelement mit der schrägen Steuerfläche (32) bzw. mit der rückwärtigen Schrägfläche (34) zusammenwirkt.

## Claims

1. Safety device (3) for a seat bench (1) which is guided in a manner such that it can be displaced over an adjustment region via two lateral, parallel sliding guides (2) within a vehicle, and in a manner such that it can be locked in different positions, comprising at least one securing rail (4), which is to be arranged between the sliding guides (2) and parallel thereto, and a securing slide (6) which is guided in a manner that it can move relative to the said securing rail, at least over the adjustment region of the seat bench (1), the securing slide (6) being arranged in a manner such that it can move freely longitudinally relative to the securing rail (4) during regular displacement movements and in positions within the adjustment region of the seat bench (1) and, by means of irregular deformations in the region of the seat bench (1), which deformations occur in the case of severe decelerations or accelerations caused, for example, by an accident, coming into engagement with the securing rail (4), the said engagement locking the seat bench (1) in place, **characterized in that** the seat bench (1) - in particular for enlarging a loading space - can be displaced within the vehicle beyond its actual adjustment region into an out-of-use position, stop means (24) being formed between the securing rail (4), which is arranged approximately centrally between the sliding guides (2), and the securing slide (6), which stop means can be controlled in such a manner that, in a position of a backrest (1a) and/or a seat part (1b) of the seat bench (1) suitable for sitting, activation of the stop means (24) enables the displacement to be restricted to the actual adjustment region and displacement into the out-of-use position is therefore prevented, and **in that** only in an out-of-use position of the backrest (1a) and/or of the seat part (1b) of the seat bench (1) is the continuing displacement of the seat bench (1) into the out-of-use position enabled, by deactivation of the stop means (24).

2. Safety device according to Claim 1, **characterized in that** the securing rail (4) is to be arranged in a positionally fixed manner within the vehicle and the securing slide (6) is to be arranged on the seat bench (1).

3. Safety device according to Claim 1 or 2, **characterized in that** the securing rail (4) has an approximately U-shaped cross section which is open in the direction of the seat bench (1) for the engagement of the securing slide (6) and has two retaining webs (10) which bound a longitudinal opening (8), the securing slide (6) which engages in the securing rail (4) through the longitudinal opening (8) gripping with two locking sections (12) behind the retaining webs (10).

4. Safety device according to Claim 3, **characterized in that** the securing rail (4) has locking means, in particular in the form of a plurality of cutouts (20) distributed over the rail length in the region of the retaining webs (10) for the engagement of at least one locking element (22) of the securing slide (6).

5. Safety device according to one of Claims 1 to 4, **characterized in that** the stop means (24) in their activated state block the securing slide (6) in the displacement direction against emerging out of the securing rail (4), while in the deactivated state of the stop means (24) the securing slide (6) can be moved longitudinally out of the securing rail (4).

6. Safety device according to one of Claims 1 to 5, **characterized in that** the securing rail (4) has, in its end region which faces in the direction of the out-of-use position, a stop element (26) which is retained automatically in a stop position, preferably by spring force, and can be moved into a release position counter to the spring force, the securing slide (6) having a counterstop (30) on one side and having an oblique control surface (32) on the other side in such a manner that in the activated state of the stop means (24) the counterstop (30) is effective and acts against the stop element (26) in order to restrict the displacement, while in the deactivated state of the stop means (34) the oblique control surface (32) is effective by acting against the stop element (26) and pushing the latter away into the release position counter to the spring force, with the result that the securing slide (6) can be moved out of the securing rail (4).

7. Safety device according to Claim 6, **characterized in that** the securing slide (6) has a rear oblique surface (34) in such a manner that when the seat bench (1) is displaced back from the out-of-use position into its actual adjustment region, the stop element (26) is pushed away counter to the spring force.

8. Safety device according to Claim 6 or 7, **characterized in that** the counterstop (30) is a rigid part of the securing slide (6) while the oblique control surface (32) is formed by a moveably mounted control lever (36) which is arranged upstream of the counterstop (30) in such a manner that in the activated state of the stop means (24) the control lever (36) is in an inactive position rendering the counterstop (30) effective, or in the deactivated state of the stop means (24) is in an active position in which it interacts itself with the stop element (26) via the oblique control surface (32).

9. Safety device according to Claim 6 or 7, **characterized in that** the oblique control surface (32) is a rigid part of the securing slide (6) while the counterstop (30) is part of a moveable control lever arrangement (38) which is arranged upstream of the control surface (32) in such a manner that in the activated state of the stop means (24) a catch lever (40) forming the counterstop (30) lies effectively in front of the control surface (32), or in the deactivated state of the stop means (24) the catch lever (40) is in an inactive position releasing the oblique control surface (32).

10. Safety device according to Claim 9, **characterized in that** the control lever arrangement (38) has a toggle lever mechanism which acts upon the catch lever (40) and has two toggle lever sections (42, 44) in such a manner that the catch lever (40) is retained rigidly in its position in which it is effective as a counterstop (30), by means of the toggle lever sections (42, 44) which are stretched out in an approximately 180° arrangement.

11. Safety device according to one of Claims 6 to 10, **characterized in that** the counterstop (30) lies in a plane (48) running perpendicular with respect to the displacement direction.

12. Safety device according to one of Claims 6 to 11, **characterized in that** the spring-stressed stop element (26) interacts with the oblique control surface (32) or with the rear oblique surface (34) via a sliding element and/or a rolling element in order to reduce friction.

## Revendications

1. Dispositif de sécurité (3) pour une banquette (1) pouvant se déplacer en translation vers l'avant sur une plage de réglage à l'intérieur d'un véhicule au moyen de deux glissières latérales parallèles (2) et qui peut être immobilisée dans différentes positions, composée d'au moins une barre de blocage (4) qui doit être agencée entre les glissières (2) et parallèlement à ces dernières, et un curseur de blocage (6) guidé mobile en mouvement relatif vers l'avant, du moins sur la plage de réglage de la banquette (1), le curseur de blocage (6) étant disposé librement mobile dans la direction longitudinale par rapport à la barre de blocage (4) pendant les mouvements de translation normaux, et dans des positions situées dans la plage de réglage de la banquette 2 et se plaçant dans un état d'engagement avec la barre de blocage (4) qui immobilise la banquette (1) sous l'effet de déformations anormales dans la région de la banquette (1), qui se produisent en présence de fortes décélérations ou accélérations dues, par exemple, à un accident, **caractérisée en ce que** la banquette (1) peut être déplacée en translation au-delà de sa plage de réglage proprement dite, à l'intérieur du véhicule pour se placer dans une position d'inutilisation - en particulier pour agrandir un espace de charge cependant qu'entre la barre de blocage (4) agencée à peu près au milieu entre les glissières (2) et le curseur de blocage (6), sont formés des moyens de butée (24) qui peuvent être commandés de telle manière que, dans une position d'un dossier (la) et/ou d'une partie d'assise (1b) de la banquette (1) qui est appropriée pour la position assise, la translation soit limitée à la plage de réglage proprement dite par l'activation des moyens de butée (24) et qu'une translation aboutissant à la position d'inutilisation soit exclue, et **en ce que** ce n'est que dans un état d'inutilisation du dossier (la) et/ou de la partie d'assise (1b) de la banquette (1) que la poursuite de la translation de la banquette (1) allant jusqu'à la position d'inutilisation est libérée par désactivation des moyens de butée (24).

2. Dispositif de sécurité selon la revendication 1,
**caractérisé en ce que** la barre de blocage (4) doit être montée en position fixe à l'intérieur du véhicule et le curseur de blocage (6) fixé à la banquette (1).

3. Dispositif de sécurité selon la revendication 1 ou 2,
**caractérisé en ce que** la barre de blocage (4) présente une section à peu près en forme de U, ouverte en direction de la banquette (1) pour l'engagement du curseur de blocage (6), cette section présentant deux nervures de retenue (10) qui délimitent une ouverture longitudinale (8), le curseur de blocage (6) qui est engagé dans la barre de blocage (4) à travers l'ouverture longitudinale (8) étant engagé derrière les nervures de retenue (10) par deux segments d'immobilisation (12).

4. Dispositif de sécurité selon la revendication 3,
**caractérisé en ce que** la barre de blocage (4) présente des moyens d'immobilisation, en particulier sous la forme de plusieurs évidements (20) répartis sur la longueur de la barre, dans la région des nervures de retenue (10), pour l'engagement d'au moins un élément d'immobilisation (22) du curseur de blocage (6).

5. Dispositif de sécurité selon une des revendications 1 à 4,
**caractérisé en ce que**, dans leur état activé, les moyens de butée (24) bloquent le curseur de blocage (6) dans la direction de la translation, pour l'empêcher de sortir de la barre de blocage (4), tandis que, dans l'état désactivé des moyens de butée (24), le curseur de blocage (6) peut être extrait longitudinalement de la barre de blocage (4).

6. Dispositif de sécurité selon une des revendications 1 à 5,
**caractérisé en ce que** la barre de blocage (4) présente, dans sa région d'extrémité qui pointe en direction de la position d'inutilisation, un élément de butée (26) qui est maintenu automatiquement dans une position de butée, de préférence par une force élastique, et peut être amené dans une position de libération à l'encontre de la force élastique, le curseur de blocage (6) présentant, d'une part, une contre-butée (30) et, d'autre part, une surface de commande inclinée (32), de telle manière que, dans l'état activé des moyens de butée (24), la contre-butée (30) soit efficace et agisse contre l'élément de butée (26) pour la limitation de la translation, tandis que, dans l'état désactivé des moyens de butée (34), la surface de commande inclinée (32) est efficace en ce sens qu'elle agit contre l'élément de butée (26) et repousse ce dernier dans la position de libération à l'encontre de la force élastique, de sorte que le curseur de blocage (6) peut être dégagé de la barre de blocage (4).

7. Dispositif de sécurité selon la revendication 6,
**caractérisé en ce que** le curseur de blocage (6) présente une surface inclinée arrière (34) de telle manière que, lors d'une translation de la banquette (1) vers l'arrière, de la position d'inutilisation à sa plage de réglage proprement dite, l'élément de butée (26) est écarté à l'encontre de la force élastique.

8. Dispositif de sécurité selon la revendication 6 ou 7,
**caractérisé en ce que** la contre-butée (30) est une partie rigide du curseur de blocage (6), tandis que la surface de commande inclinée (32) est formée par un levier de commande (36) monté mobile, disposé en avant de la contre-butée (30) de telle manière que, dans l'état activé des moyens de butée (24), le levier de commande (36) se trouve dans une position inactive qui rend la contre-butée (30) efficace ou que, dans l'état désactivé des moyens de butée (24), il se trouve dans une position active qui coopère elle-même avec l'élément de butée (26) par l'intermédiaire de la surface de commande inclinée (32).

9. Dispositif de sécurité selon la revendication 6 ou 7,
**caractérisé en ce que** la surface de commande inclinée (32) est une partie rigide du curseur de blocage (6), tandis que la contrebutée (30) est une partie constitutive d'un dispositif de levier de commande mobile (38) disposé en avant de la surface de commande (32) de telle manière que, dans l'état activé des moyens de butée (24), un levier de verrouillage (40) qui forme la contre-butée (30) soit placé efficacement devant la surface de commande (32) ou que, dans l'état désactivé des moyens de butée (24), le levier de verrouillage (40) se trouve dans une position inactive qui libère la surface de commande inclinée (32).

10. Dispositif de sécurité selon la revendication 9,
**caractérisé en ce que** la dispositif de levier de commande (38) présente un mécanisme de leviers à genouillère comprenant deux segments de leviers à genouillère (32, 44) qui charge le levier de verrouillage (40), de telle manière que le levier de verrouillage (40) soit retenu rigidement dans sa position efficace comme contre-butée (30) par les segments de leviers de genouillère (42, 44) situés dans une position d'extension à peu près à 180°.

11. Dispositif de sécurité selon une des revendications 6 à 10,
**caractérisé en ce que** la contre-butée (30) se trouve dan un plan (48) qui s'étend perpendiculairement à la direction de la translation.

12. Dispositif de sécurité selon une des revendication 6 à 11,
**caractérisé en ce que**, pour réduire le frottement, l'élément de butée (26) chargé élastiquement coopère avec la surface de commande incliné (32), ou avec la surface inclinée arrière (34) par l'intermédiaire d'un élément de glissement et/ou d'un élément roulant.
